# EUROPEAN PATENT APPLICATION

(11) **EP 2 048 067 A2**
(43) Date of publication of application: **15.04.2009**
(21) Application number: 08166461.7
(22) Date of filing: 13.10.2008
(51) Int. Cl.: B62J 9/00

(54) **Bicycle bag mounting assembly**

(30) Priority: 12.10.2007 NL 1034509
(71) Applicant: Drapers, René Charles, Shatin, Hong Kong (CN)
(72) Inventor: Drapers, René Charles, Shatin, Hong Kong (CN)
(74) Representative: Brookhuis, Hendrik Jan Arnold

(57) **Abstract**

A bicycle bag with a mounting assembly fitted in a bottom area of a vertical side wall thereof said mounting assembly being arranged to hook behind a bar of the bicycle, in particular, behind a bar of a luggage rack.

The mounting assembly comprising:
- a rail member (2) with a longitudinal slot (3) therein and fitted on the side wall;
- a hook assembly (10) that protrudes through the longitudinal slot and can be fixed in a desired position with regard to the rail member.

The hook assembly (10) comprising:
- a clamping member (15) which is located at the rear of the rail member and is slidable along the longitudinal slot;
- an intermediate member (20) located at the front of the rail member and provided with a through hole;
- a hook member (30) that bears against the front of the intermediate member and has a through hole aligned with the through hole of the intermediate member, wherein the hook member has a hook lip extending sideways;
- a tightening member (40) that protrudes through the aligned holes and is screwed into the clamping member.

## Description

The invention relates to a bicycle bag that has been provided with a mounting assembly in a bottom section of a side wall thereof, said mounting assembly being arranged to hook behind a bicycle bar, in particular, behind a bar of a luggage rack.

It is generally known from the state-of-the-art to provide a bicycle bag, which is to be suspended on a luggage rack, with a hook assembly having one or more hooks at the top of the respective side wall of the bicycle bag with which, in practice, the bicycle bag will be fixed to the luggage rack on a horizontal bar. The bottom of the bicycle bag can then still move freely which is often not desired. It is generally known to provide a mounting assembly in the bottom section of the respective side wall of the bicycle bag to impede this free movement. This is, for example, a simple Velcro loop or an elastic band that is placed around a bar (usually a more or less vertically placed bar) of the luggage rack or the bicycle frame,

Bicycle bags that are sold under the brand name of FastRider are known from the state-of-the-art. Such bicycle bags are provided with a mounting assembly according to the preamble of claim 1.

The tightening member in these known bicycle bags is a screw that must be tightened with a screwdriver. The screw cuts through both the plastic material of the intermediate member and through the clamping member which in practice causes problems. It has been shown, in particular, that the screw is difficult to turn when it has been screwed into the intermediate part so that screwing into the clamping member is problematic.

The aforementioned issues lead to the situation wherein users do not change the position of the hook assembly along the rail part and the angle direction of the hook lip once it has been set. It has also been found that some users, for example, elderly people, are not able to realise the installation themselves.

An object of the invention is to provide an improved bicycle bag.

The above object is achieved with a bicycle bag according to the preamble of claim 1 characterized in that the tightening member is a bolt member with a shaft provided with a thread, and with a turning knob that can be manually gripped, and in that the clamping member is a nut member that is provided with an inner thread into which the bolt member is screwed, and in that the through holes of the hook member and the intermediate member have at least the same diameter as the shaft of the bolt.

This change to the construction in comparison to the above known construction will ensure that a user can easily adjust the correct position along the rail member and the correct angle direction of the hook lip without having to use tools.

This option will not only resolve the outlined problems but also, moreover, has the advantage that a bicycle bag can easily be used for different bicycles. Many people have more than one bicycle per person and, moreover, a family often has a whole set of bicycles. The bicycle bag according to the invention can then easily be "adjusted" to the other bicycle.

The invention will be further explained below based on the drawing. In the drawing:

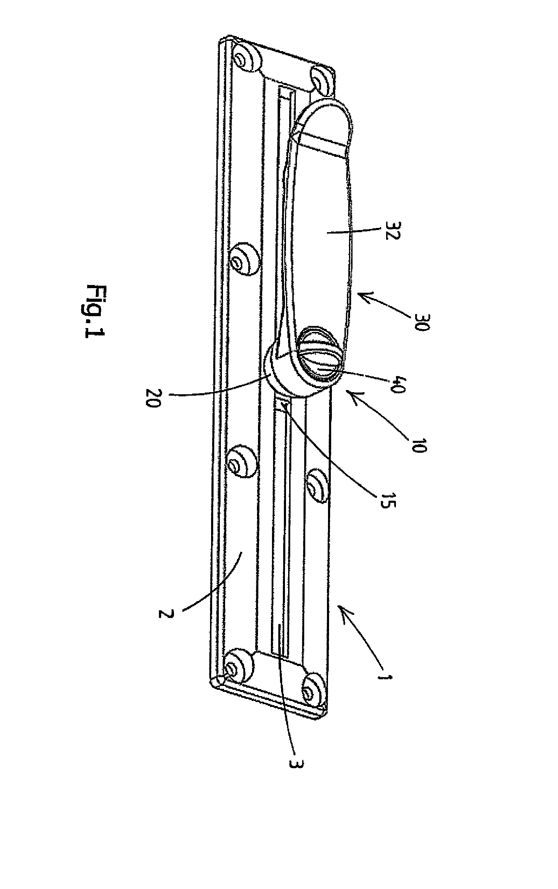

Figure 1 shows in perspective a preferred embodiment of the mounting assembly of a bicycle bag according to the invention;

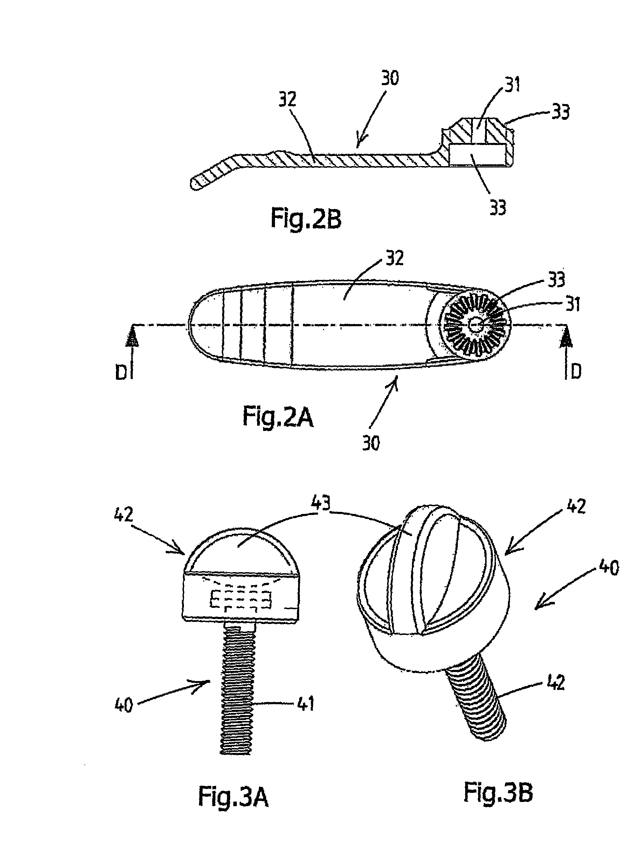

Figures 2a and b, show respectively in rear view and in cross section along the A-A line the hook lip of the mounting assembly of Figure 1;
Figures 3a and b, show respectively in side view and in perspective the tightening member of the assembly of Figure 1;

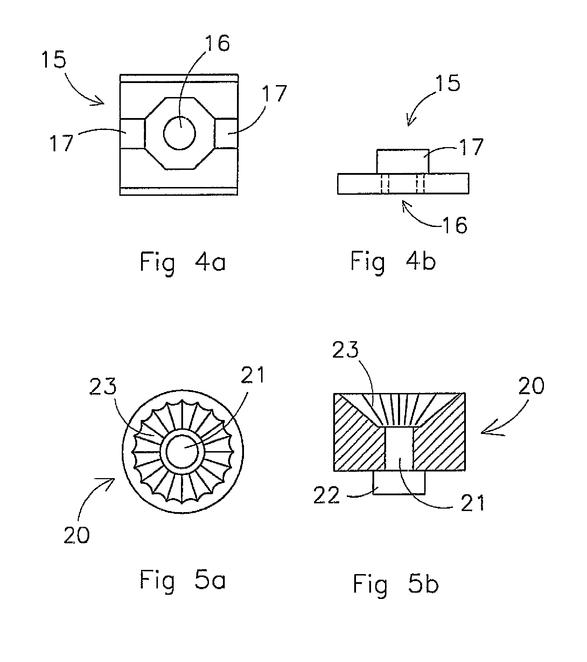

Figure 4a and b, show respectively in front view and in side view the nut member of the assembly of Figure 1; and
Figures 5a and b, show respectively in front view and in cross section the intermediate member of the assembly of Figure 1.

Based on the drawing, a preferred embodiment of the mounting assembly of a bicycle bag according to the invention (which is not shown) will be explained. In practice, the mounting assembly 1 is mounted in a bottom area of a vertical side wall of the bicycle bag. This side wall is directed towards the rear wheel of the bicycle when the bicycle bag is fixed to a luggage rack with features that are not shown here.

The shown mounting assembly 1 is arranged to hook behind a bar of the bicycle, in particular, behind a bar of a luggage rack or of the frame of the bicycle.

The mounting assembly 1 comprises a rail member 2 with therein a longitudinal slot 3, wherein said rail member is to be attached to the side wall. In this embodiment, the rail member is straight and is provided with a straight slot. A bent version of the rail member and longitudinal slot are also possible as is already available on the market.

A hook assembly 10, to be further explained in detail, protrudes through the longitudinal slot. This assembly 10 can be fixed with regard to the rail member 2 in a desired position.

The hook assembly 10 comprises:
- a nut member 15 which is located at the rear of the rail member 2 and is slidable along the longitudinal slot;
- an intermediate member 20 located at the front (and, therefore, the side turned away from the wall of the bicycle bag) of the rail member 2, said intermediate member being provided with a through hole 21;
- a hook member 30 that lies against the front of the intermediate member and has a through hole 31 aligned with the through hole 21 of the intermediate member 20, wherein the hook member 30 has a hook lip 32 that extends sideways;
- a bolt member 40 that protrudes through the aligned holes 21, 31 and is screwed into the nut member 15.

In greater detail, the nut member 15 is provided with an inner thread portion 16 that is formed by a metal insert having a bore with an inner thread, said metal insert being embedded in the plastic material of the nut member 15. The nut member 15 is provided with one or more projections that prevent the nut member 15 from turning with the bolt member 40 when the bolt member 40 is turned. Here, two projections 17 are located at the front that protrude in the longitudinal slot 3 and, thus, impede turning.

The intermediate member 20 is also provided on the rear with one or more projections 22 (in this example, one) that protrude in the longitudinal slot 3 to prevent that the intermediate member 20 can turn with regard to the rail member 1.

In this embodiment, one or more projections 22 of the intermediate member engage one or more projections 17 of the nut member 15 in such a way that the hole 21 in the intermediate member 20 is positioned with regard to the inner thread portion 16, as is preferred.
This positioning simplifies the placement of the shaft 41 of bolt member 40 through the aligned holes and the screwing thereof in the nut member.

The parts of the front of the intermediate member and the rear of the hook member 30 that come to bear against each other are provided with toothed parts 23, 33, that work together and are formed here on conical members that fit into each other, so that an angle direction of the hook lip 32 that has already been set is maintained when the bolt member 40 is tightened.

The bolt member 40 has a shaft 41 provided with a thread (preferably metric) and a turning knob 42 that can be gripped manually as shown here with a central engagement ridge 43.

As preferred, the hook member 30 in this example is provided with a recess 33 in which a cylindrical section of the turning knob 42 fits.

The through holes of the hook member and the intermediate member, that is to say, the holes 31, 21, here have a diameter that is slightly larger than the diameter of the bolt shaft 41, as is preferred, so that the thread thereof does not wear away the material of these members.

When the bolt member has been suitably loosened, the user can turn the hook lip around and, thus, set the desired angle direction thereof. At the same time, the hook assembly 10 is slidable along the rail member 2 to set the desired position. The positions of the hook assembly and the angle direction of the hook lip are secured by subsequently tightening the bolt member manually without using tools.

Should the aforementioned settings have to be changed because, for example, the bicycle bag must be fixed on to another bicycle, the user can easily loosen the bolt member 40 manually and, thus, realise the desired settings and retighten the bolt member 40.

## Claims

1. Bicycle bag with a mounting assembly (1) fitted on the bottom part of a vertical side wall thereof, said mounting assembly being arranged to hook behind a bicycle bar, in particular, behind a bar of a luggage rack, said mounting assembly comprising:
- a rail member (2) with a longitudinal slot (3) therein, said rail member being fixed to the side wall,
- a hook assembly (10) that protrudes through the longitudinal slot and that can be fixed in a desired position with regard to the rail member,
said hook assembly (10) comprising:
- a clamping member (15) located at the rear of the rail member and which is slidable along the longitudinal slot;
- an intermediate member (20) located at the front of the rail member and provided with a through hole (21);
- a hook member (30) that bears against the front of the intermediate member and has a through hole (31) aligned with the through hole of the intermediate member, wherein the hook member has a hook lip (32) extending sideways;
- a tightening member (40) that protrudes through the aligned holes (21, 31) and is screwed into the clamping member (15),
wherein the front of the intermediate member and the rear of the hook member are provided with toothed parts (23,33) that work together, and wherein the hook lip (32) can be turned around when the tightening member (40) has been loosened for adjusting the desired angle direction, and wherein the hook assembly is also slidable along the rail member for adjusting the desired position, and wherein the position of the hook assembly and the angle direction of the hook lip are secured by tightening the tightening member,
**characterized in that**
the tightening member is a bolt member (40) with a shaft (41) having a thread and with a turning knob (42) that can be gripped manually, and **in that** the clamping member is a nut member (15) provided with an inner thread (16) into which the bolt member is screwed, and **in that** the through holes (21, 31) of the hook member and the intermediate member have at least the same diameter as the shaft (41) of the bolt member (40).

2. Bicycle bag according to claim 1, wherein the nut member (15) is provided with one or more projections (17) that prevent the nut member (15) from turning with the bolt member 40 when the bolt member 40 is turned, preferably with one or more projections (17) that protrude into the longitudinal slot (3) and thereby impede turning.

3. Bicycle bag according to claim 1 or 2, wherein the intermediate member (20) is provided at its rear with one or more projections (22) protruding in the longitudinal slot (3) that prevent the intermediate member (20) from turning with regard to the rail member (1).

4. Bicycle bag according to claims 2 and 3, wherein one or more of the projections (22) of the intermediate member (20) engage with one or more of the projections (17) of the nut member (15) in such a way that the hole (21) in the intermediate member (20) is positioned with regard to the inner thread portion (16).

5. Mounting assembly for a bicycle bag according to one or more of the preceding claims.
